# EUROPEAN PATENT SPECIFICATION

(11) **EP 4 241 546 B1**
(45) Date of publication and mention of the grant of the patent: **07.05.2025**
(21) Application number: 23157666.1
(22) Date of filing: 21.02.2023
(51) Int. Cl.: A01B 63/111, A01C 7/20

(54) **AGRICULTURAL MACHINE AND METHOD OF PROVIDING IMPLEMENT HEIGHT CONTROL FOR SUCH AN AGRICULTURAL MACHINE**
LANDWIRTSCHAFTLICHE MASCHINE UND VERFAHREN ZUR BEREITSTELLUNG EINER VORRICHTUNG ZUR STEUERUNG DER HÖHE DES ARBEITSGERÄTS FÜR EINE DERARTIGE LANDWIRTSCHAFTLICHE MASCHINE
MACHINE AGRICOLE ET PROCÉDÉ DE FOURNITURE DE COMMANDE DE HAUTEUR D'OUTIL POUR UNE TELLE MACHINE AGRICOLE

(30) Priority: 08.03.2022 US 202217689349
(43) Date of publication of application: 13.09.2023
(73) Proprietor: Deere & Company, Moline, IL 61265 (US)
(72) Inventor: WONDERLICH, GRANT J., 68163 Mannheim (DE); KINNEY, COLTER W., 68163 Mannheim (DE); WACKERLE, BRADLEY A., 68163 Mannheim (DE); MARIMAN, NATHAN A., 68163 Mannheim (DE); PETERSON, JAMES R., 68163 Mannheim (DE); MARO, RANDALL A., 68163 Mannheim (DE); HERRMANN, KENNETH E., 68163 Mannheim (DE)
(74) Representative: Reichert, Christian

(56) References cited:
- WO-A1-2021/014231
- SE-A1- 1 951 216
- US-A1- 2015 264 857
- US-A1- 2021 315 148

## Description

### FIELD OF THE DESCRIPTION

The present description relates to agricultural equipment. More specifically, the present description relates to sensing and controlling the height of a portion of an agricultural machine relative to the ground over which it is traveling.

### BACKGROUND

There are a wide variety of different types of agricultural machines including row planters, disks, ripper shanks, plows, blades, cultivators, harrows, and drills. These types of equipment often have many different mechanisms that can be controlled, at least to some extent, by an operator. Some of these mechanisms include mechanisms that are mechanical, electrical, hydraulic, and electrochemical, among others.

An example of such agricultural machine is disclosed in WO 2021/014231 A1, wherein an agricultural implement includes a row unit frame coupled to a draw bar by a height-adjustable mount, a set of opening discs coupled to the row unit frame such that the opening discs are vertically fixed relative to the row unit frame, and a biasing member configured to adjust a height of the row unit frame to maintain the opening discs in soil at a selected elevation relative to the draw bar. A method of planting may include determining a height of a draw bar relative to a surface of soil, and adjusting a height of the row unit frame relative to the draw bar to apply a force to push a seed trench opening assembly into the soil and form a trench therein. The height of the row unit frame relative to the draw bar may be independent of the hardness of the soil.

Another such agricultural machine is known from US 2015/264857 A1, wherein an agricultural planter includes systems, methods, and apparatus for providing down force pressure at row units of the planter. The row units may include an electric linear actuator connected to linkages of the row units to provide and maintain a down force pressure for the row unit. The linkage may also be removed and replaced with a strut or like mechanism to apply a direct down force pressure to components of the row unit. One or more sensors can be included to obtain information related to the ground to automatically adjust the amount of down force provided based upon a ground characteristic in order to maintain a substantially uniform furrow depth.

Yet another agricultural machine is disclosed in US 2021/315148 A1, wherein an implement includes an implement frame having an integrated elongate toolbar carrying at least one row unit, at least one wheel coupled to the implement frame and defining an axis of rotation, a sensor configured to sense a position of the at least one row unit relative to the ground, and a control system. The control system is configured to receive a signal related to the sensed position of the at least one row unit relative to the ground and cause a lift system to raise or lower a portion of the implement frame connected to the lift system to rotate the implement frame about the axis of rotation of the at least one wheel based at least in part on the signal. Control systems and related methods are also disclosed.

Further, SE 1 951 216 A1 shows a row unit for the supply of granular material to the ground, comprising seed openers, which have a seed furrow opening arm, and a seed furrow opening disc, which is rotatable attached to a distal part of the seed furrow opening arm. The row unit has a driving arrangement that is operationally connected to the disk and is designed to turn the disk.

The mentioned machines include tools that engage the soil. When using these types of machines, it is often desirable to control the operating depth of engagement of the tools with the soil. Furthermore, it is often desirable to maintain an operating depth consistently while an agricultural machine travels across a worksite. If an operating depth is to be modified, it can also be important to ensure the depth is modified accurately and efficiently as the agricultural machine travels across the worksite.

However, as the agricultural machine travels across the worksite, a desired operating depth can depend on various conditions of the worksite surface. Such conditions can include, but are not limited to, soil composition, soil compaction, soil moisture level, and various other conditions. Based on the conditions, the operating depth, for any particular tool, may need to change in different areas of the worksite. However, accurately controlling operating depth, efficiently, can be problematic because of the varying conditions of the worksite. Additionally, these types of machines often operate in relatively rugged physical terrain. They can operate on relatively steep grades, where the surface is uneven or has obstacles, or on terrain with varying levels of ground conditions.

The discussion above is merely provided for general background information and is not intended to be used as an aid in determining the scope of the claimed subject matter.

### SUMMARY

An agricultural machine includes a frame and a set of frame supporting elements supporting the frame. A set of row units is mounted to the frame and movable relative to the wheels to change a depth of engagement of the row units with the ground over which the agricultural machine travels. At least one actuator drives movement of the set of row units relative to the frame. A ground sensor is operably coupled to the agricultural machine and configured to provide a ground distance signal. Row unit height adjustment logic is configured to receive the ground distance signal and provide a control output to the at least one actuator to generate a height value of the row units relative to ground. The agricultural machine might be a planter and the row units include a plurality of opener discs. The agricultural machine may include a rockshaft pivotally coupled to the frame and a plurality of row units operably coupled to the rockshaft. The ground sensor might be operably mounted to the rockshaft. The ground sensor might be selected from the group consisting of an ultrasonic sensor, a lidar sensor, and a radar sensor. The ground sensor may include a position sensor configured to measure an angle of a mechanism that varies with distance to ground. The ground sensor may include a gauge wheel operably mounted to a row unit, the gauge wheel having angle that varies with distance to ground, and wherein the ground distance signal is received from a position sensor coupled to the gauge wheel. The ground sensor may include a plurality of gauge wheels, one leading and one trailing, and wherein the ground distance signal is based on the plurality of gauge wheels being out of plane. The ground sensor might be an indirect sensor. The ground sensor includes a pressure sensor operably coupled to an individual row hydraulic downforce cylinder. The ground sensor may include a sensor mounted to a draft tube in front of a main-frame. The ground sensor might be configured to detect relative motion between a towing machine and the agricultural machine. The relative motion may include at least one of pitch, yaw, and roll. The ground sensor might be a gyroscope mounted to the towing machine. Another example includes, a method of providing predictive implement height control for a planter having a set of ground row units movable mounted to a rockshaft and movable to change a depth of engagement of the row units with the ground over which the planter travels. The method includes obtaining at least one ground-based measurement, calculating a row unit height adjustment, and providing a control output based on the row unit height adjustment. The at least one ground-based measurement might be obtained from a direct sensor. The at least one ground-based sensor might be obtained from an indirect sensor. Te control output might be provided to a rockshaft cylinder. The control output might be provided to an individual row hydraulic downforce actuator.

A further example is a planter that includes a frame, a set of wheels supporting the frame, and a rockshaft coupled to the frame. A plurality of row units is movably coupled to the rockshaft, each row unit having a set of opener discs, each row unit also having an individual row unit downforce actuator. A rockshaft actuator controls a position of the rockshaft relative to the frame. A ground sensor is operably coupled to the planter and configured to provide a ground distance signal. Row unit height adjustment logic is coupled to the ground sensor and is configured to receive the ground distance signal and provide a control output to the at least one of the rockshaft actuator and an individual row unit downforce actuator to provide closed loop height control of each row unit relative to ground.
This Summary is provided to introduce a selection of concepts in a simplified form that are further described below in the Detailed Description.

### BRIEF DESCRIPTION OF THE DRAWINGS

FIG. 1 is a top view of one example of an agricultural planting machine.
FIG. 2 is a side view showing one example of a row unit.
FIG. 3 shows one example of the planting depth actuator assembly.
FIG. 4 is a perspective view of a planter with which embodiments described herein are particularly useful.
FIG. 5 is a side view of a portion of a row unit having a predictive ground sensor and row unit height adjustment mechanism in accordance with one embodiment.
FIG. 6 is a side view of a portion of a row unit having a predictive ground sensor and row unit height adjustment mechanism in accordance with another embodiment.
FIG. 7 is a side view of a portion of a row unit having a predictive ground sensor and row unit height adjustment mechanism in accordance with another embodiment.
FIG. 8 is a perspective view of a portion of a row unit having a predictive ground sensor and row unit height adjustment mechanism in accordance with one embodiment.
FIG 9 is a system block diagram of an agricultural machine having predictive implement height control in accordance with one embodiment.
FIG. 10 is a flow diagram of a method of providing predictive implement height control for an agricultural implement in accordance with one embodiment.
FIG. 11 is a block diagram of a mobile agricultural machine deployed in a remote server architecture.
FIG. 12 is a simplified block diagram of a handheld or mobile computing device that can be used in the machines and architecture shown in the previous FIGS.
FIG. 13 shows one example of handheld or mobile computing device that can be used in the machines and architectures shown in the previous FIGS.
FIG. 14 shows one example of a handheld or mobile computing device that can be used in the machines and architectures shown in the previous FIGS.
FIG. 15 shows one example of a computing environment that can be used in the machines and architectures shown in the previous FIGS.

### DETAILED DESCRIPTION

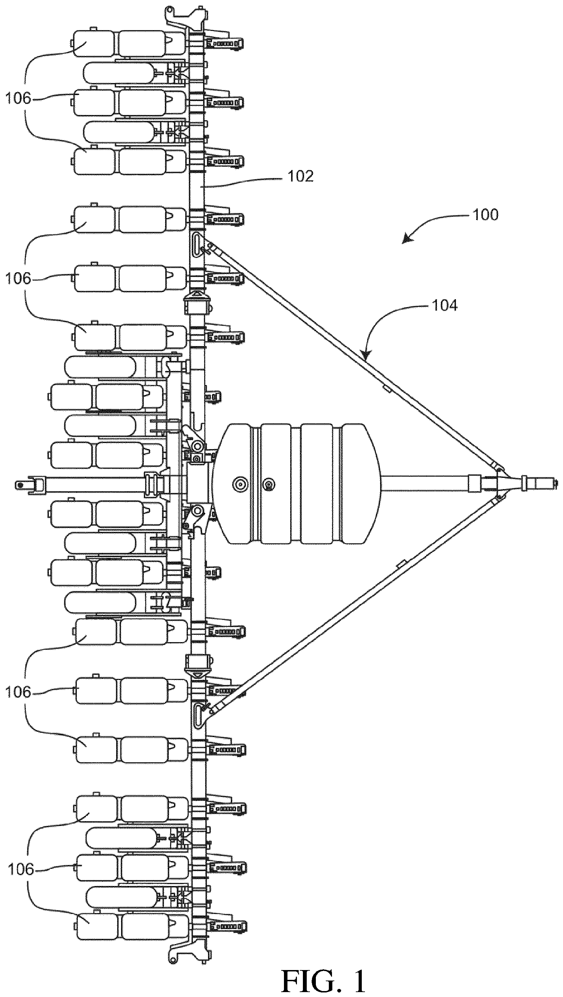

FIG. 1 is a top view of one example of an agricultural planting machine 100. Machine 100 is a row crop planting machine that illustratively includes a toolbar 102 that is part of a frame 104. FIG. 1 also shows that a plurality of planting row units 106 are mounted to the toolbar 102. Machine 100 can be towed behind another machine, such as a tractor.

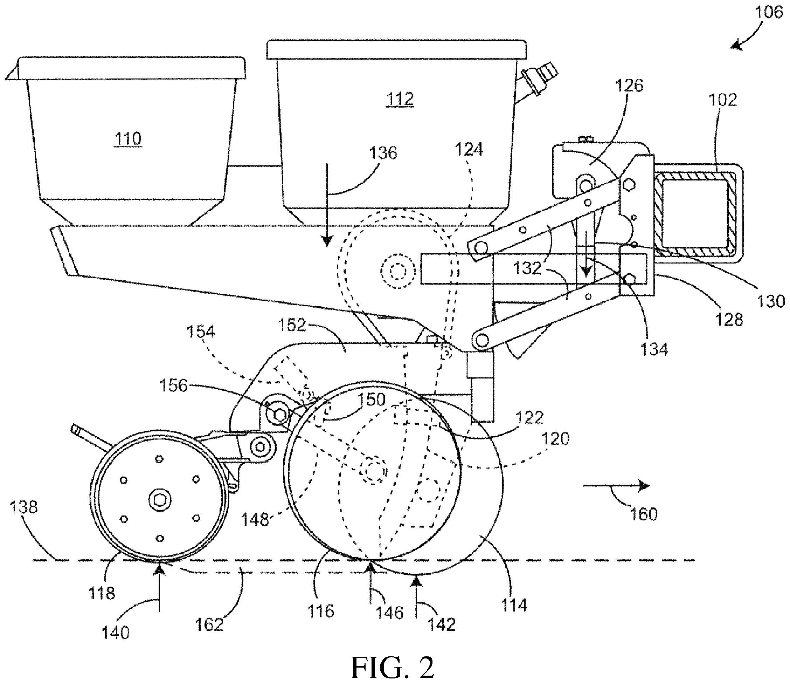

FIG. 2 is a side view showing one example of a row unit 106. Row unit 106 illustratively includes a chemical tank 110 and a seed storage tank 112. It also illustratively includes a disc opener 114, a set of gauge wheels 116, and a set of closing wheels 118. Seeds from tank 112 are fed by gravity into a seed meter 124. The seed meter controls the rate at which seeds are dropped into a seed tube 120 or other seed delivery system, such as a brush belt, from seed storage tank 112. The seeds can be sensed by a seed sensor 122.

It will be noted that there are different types of seed meters, and the one that is shown is shown for the sake of example only. For instance, in one example, each row unit 106 need not have its own seed meter. Instead, metering or other singulation or seed dividing techniques can be performed at a central location, for groups of row units 106. The metering systems can include rotatable discs, rotatable concave or bowl-shaped devices, among others. The seed delivery system can be a gravity drop system (such as that shown in FIG. 2) in which seeds are dropped through the seed tube 120 and fall (via gravitational force) through the seed tube into the seed trench. Other types of seed delivery systems are assistive systems, in that they do not simply rely on gravity to move the seed from the metering system into the ground. Instead, such systems actively capture the seeds from the seed meter and physically move the seeds from the meter to a lower opening, where they exit into the ground or trench. A downforce actuator 126 is mounted on a coupling assembly 128 that couples row unit 106 to toolbar 102. Actuator 126 can be a hydraulic actuator, a pneumatic actuator, a spring-based mechanical actuator or a wide variety of other actuators. In the example shown in FIG. 2, a rod 130 is coupled to a parallel linkage 132 and is used to exert an additional downforce (in the direction indicated by arrow 134) on row unit 106. The total downforce (which includes the force indicated by arrow 134 exerted by actuator 126, plus the force due to gravity acting on row unit 106, and indicated by arrow 136) is offset by upwardly directed forces acting on closing wheels 118 (from ground 138 and indicated by arrow 140) and double disc opener 114 (again from ground 138 and indicated by arrow 142). The remaining force (the sum of the force vectors indicated by arrows 134 and 136, minus the force indicated by arrows 140 and 142) and the force on any other ground engaging component on the row unit (not shown), is the differential force indicated by arrow 146. The differential force may also be referred to herein as the downforce margin. The force indicated by arrow 146 acts on the gauge wheels 116. This load can be sensed by a gauge wheel load sensor which may be located anywhere on row unit 106 where it can sense that load. It can also be placed where it may not sense the load directly, but a characteristic indicative of that load. Both sensing the load directly or indirectly are contemplated herein and will be referred to as sensing a force characteristic indicative of that load (or force). For example, it can be disposed near a set of gauge wheel control arms (or gauge wheel arm) 148 that movably mount gauge wheels 116 to shank 152 and control an offset between gauge wheels 116 and the discs in double disc opener 114, to control planting depth. Arms (or gauge wheel arms) 148 illustratively abut against a mechanical stop (or arm contact member-or wedge) 150. The position of mechanical stop 150 relative to shank 152 can be set by a planting depth actuator assembly 154. Control arms 148 illustratively pivot around pivot point 156 so that, as planting depth actuator assembly 154 actuates to change the position of mechanical stop 150, the relative position of gauge wheels 116, relative to the double disc opener 114, changes, to change the depth at which seeds are planted. This is described in greater detail below.

In operation, row unit 106 travels generally in the direction indicated by arrow 160. The double disc opener 114 opens a furrow in the soil 138, and the depth of the furrow 162 is set by planting depth actuator assembly 154, which, itself, controls the offset between the lowest parts of gauge wheels 116 and disc opener 114. Seeds are dropped through seed tube 120, into the furrow 162 and closing wheels 118 close the soil.

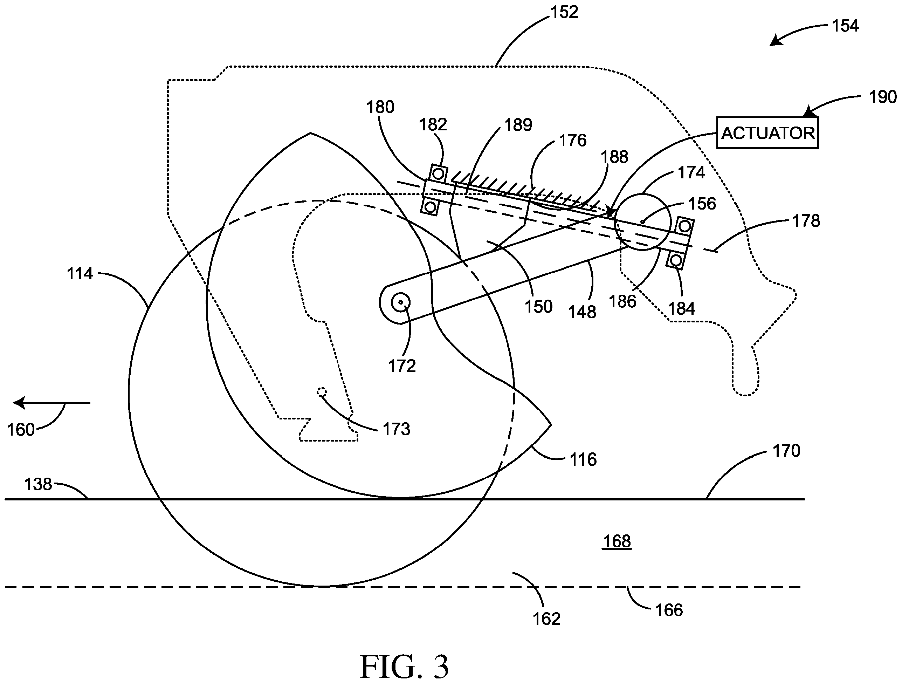

In accordance with one example, actuator assembly 154 can be automatically actuated by a control system, from the operator compartment of the towing vehicle. It can be actuated based on an operator input detected through that control system, or it can be automatically actuated to automatically change the planting depth as row unit 106 is towed across the field. In one example, and as is described in greater detail below, it can be actuated to maintain a desired trench contour or trench profile so that the depth of the seed trench varies, in a desired way. FIG. 3 shows one example of the planting depth actuator assembly 154, in more detail. Planting depth actuator assembly 154 illustratively includes an actuator 190 that drives rotation of a linkage that, itself, drives movement of mechanical stop 150. In one example, the linkage can include a drive mechanism 180 which can be coupled to output of action 190. Drive mechanism 180, in turn, drives movement of a mechanical stop or wedge 150, as is described in more detail below. Because FIG. 3 is a side view, only one opening disc 114, gauge wheel 116, closing disc 118 and gauge wheel arm 148 are shown. It will be appreciated, however, that each of these can have another member to form a pair. This is one example only. Similar items to those shown in FIG. 2 are similarly numbered.

FIG. 3 shows opener disc 114 is rotatably mounted to shank 152 at point 173. Opener discs 114 are pulled through the soil in the direction indicated by arrow 160 and they open a trench or furrow 162 in the soil. The seeds are placed into trench (or furrow)162. The trench is defined by a bottom soil portion 166, trench sidewalls (one of which is shown at 168) and the soil surface 170. The vertical distance between the soil surface 170 and the trench bottom 166 is defined as the planting depth. To obtain a desired planting depth, the pair of gauge wheels 116 are forced into contact with, and follow, the soil surface 170. A downforce system (such as downforce actuator 126 and parallel linage 132 shown in FIG. 2) is used to apply a downforce on row unit 106 to ensure full penetration of the opener discs resulting in ground contact between the gauge wheels 116 and the soil surface 170 with the gauge wheels arm 148 engaging the stop 150.

Gauge wheels 116 are movably connected to the row unit shank 152 by a set of gauge wheel arms 148. The gauge wheels 116 are each connected to an arm 148 by a rotary joint 172. Similarly, each arm 148 is connected to shank 152 by rotary joint 174, so that they are pivotable about a pivot point 156. As the arms 148 pivot about pivot point 156, they move upwardly and downwardly in FIG. 3 to increase or decrease, respectively, the distance between the bottom most points of opening discs 114 and gauge wheels 116, and thus change the planting depth (the depth of a furrow 162).

In the example shown in FIG. 3, the mechanical stop 150 is formed by a wedge that is located between the gauge wheel arm 148 and a further mechanical stop 176 that may be defined by a portion of the row unit shank 152. The position of the wedge is illustratively changed along a longitudinal axis 178 of a drive mechanism 180. As the position of the wedge 150 is changed along axis 178, it changes the position of the upper limit of rotation of gauge wheel arm 148 about pivot point 156. Thus, when the gauge wheel 116 is forced into contact with the ground, wedge 150 defines the position of gauge wheels 116 relative to the row unit shank 152 and relative to opening discs 114, thus defining planting depth.

In one example, drive mechanism 180 is a lead screw that is mounted inside the row unit shank 152 using a set of bearings 182 and 184. The lead screw illustratively has a threaded exterior surface 186 that interacts with a threaded interior surface 188 of a carriage 189 that carries wedge 150 so that, as lead screw 180 rotates within bearings 182 and 184, it drives movement of wedge 150 along longitudinal axis 178 in a direction that is determined by the direction of rotation of lead screw 180. Changing the position of wedge 150 along axis 178 thus changes the angle between the longitudinal axis 178 of lead screw 180 and the elongate axis of gauge wheel arms 148.

In one example, actuator 190 drives rotation of lead screw 180 at a controllable speed and in a controllable direction. Actuator 190 may illustratively be an electric motor with a locking member (such as a self-locking worm drive) mounted between the electric motor and lead screw 180. This can serve to increase the torque available to turn lead screw 180. The self-locking characteristic of the worm drive allows the worm drive to hold the set depth while downforce is acting on gauge wheels 116, without torque being applied to the electric motor or other actuator 190. This also illustratively allows the position of wedge 150 to be changed while downforce is acting on the gauge wheel 116 and allows the actuator 190 to overcome frictional forces between wedge 150 and gauge wheel arms 148, as well as those forces between wedge 150 and mechanical stop 176, and further frictional forces between the interior threaded surface 188 of carriage 189 and the exterior threaded surface 186 of lead screw 180. A different gear ratio may be used, depending upon the force available from actuator 190. In one example, the gear ratio may be 1:20, although this is just one example. There are a wide variety of different types of agricultural machines used in the agricultural industry. Some of these machines can include tillage machines which include a wide variety of different ground-engaging tools that can be moved to a desired operating depth within the soil. These ground-engaging tools can include, but are not limited to, disks, ripper shanks, plows, blades, cultivators, harrows, and drills.

As mentioned above, when using these types of machines, it is often desirable to control the operating depth of engagement with the soil. Furthermore, it is often desirable to maintain an operating depth consistently while an agricultural machine travels across a worksite. If an operating depth is to be modified, it can also be important to ensure the depth is modified accurately and efficiently as the agricultural machine travels across the worksite. However, as the agricultural machine travels across the worksite, a desired operating depth can depend on various conditions of the worksite surface.

To determine and control the depth of ground-engaging tools, some current systems use sensors such as Hall Effect sensors, or other types of sensors. In these systems, the sensors sense the position of a main frame of the mobile agricultural machine, relative to the wheels of the mobile agricultural machine. This is used to set the depth of engagement of the tools. However, these types of sensor systems do not always provide an accurate indication of the depth of engagement of the ground-engaging tools with the soil. Because these sensors sense the position of a frame relative to the wheels, the accuracy of such sensors is dependent upon the position of the wheels remaining reflective of true worksite surface height.

When an agricultural machine travels over a worksite that is, for example, soft, and a desired operating depth of 10 inches is set by the operator, the wheels may sink into the ground (e.g.an additional 3 inches). Thus, the sensor that senses the position of the main frame relative to the wheels will continue to sense an operating depth of 10 inches because it is only sensing the position of the main frame of the agricultural machine, relative to the wheels and does not account for the position of the wheels relative to the ground surface. In other words, even though the wheels have sunk into the worksite surface 3 inches, the position of the frame relative to the wheels remains the same because the offset between the wheels and the frame remains unchanged. In this example, however, the actual depth of engagement of the tools with the soil will be 13 inches instead of the desired 10 inches, because the wheels have sunk into the soil 3 inches.

Similarly, the wheels may encounter uneven ground or obstacles along the worksite surface. This may cause the wheels to ascend to a height that is not reflective of true worksite surface level, and thereby raise the operating depth of the ground-engaging tools without providing accurate feedback to the operator indicating such an ascension. Consistent, accurate, and efficient operating depth across a worksite surface may be desired in many agricultural operations, and these current systems can often lead to inconsistency.

To address these issues, sensors, such as radar, sensors, can be used to sense the worksite level relative to the frame and give feedback as to the distance of the frame above the worksite surface and thus more accurately determine and maintain operating depth of ground-engaging tools. However, these types of sensors can have trouble when the surface is uneven, such as when mobile agricultural machine encounters obstacles like debris, residue, rocks, root balls, stumps, etc. Obstacles on the worksite surface can give a false indication of the position of the true worksite surface, which in turn causes the machine to move the ground-engaging tools to, or maintain them at, an undesired operating depth. By way of example, a radar sensor may be mounted to the frame of the agricultural machine and be directed to sense a distance between the frame and the worksite surface. However, if the machine travels over a portion of a field where the ground surface is covered with several inches of residue, the radar sensor will measure from the top of the residue mat and thus give an inaccurate indication of the frame height above the actual surface of the ground.

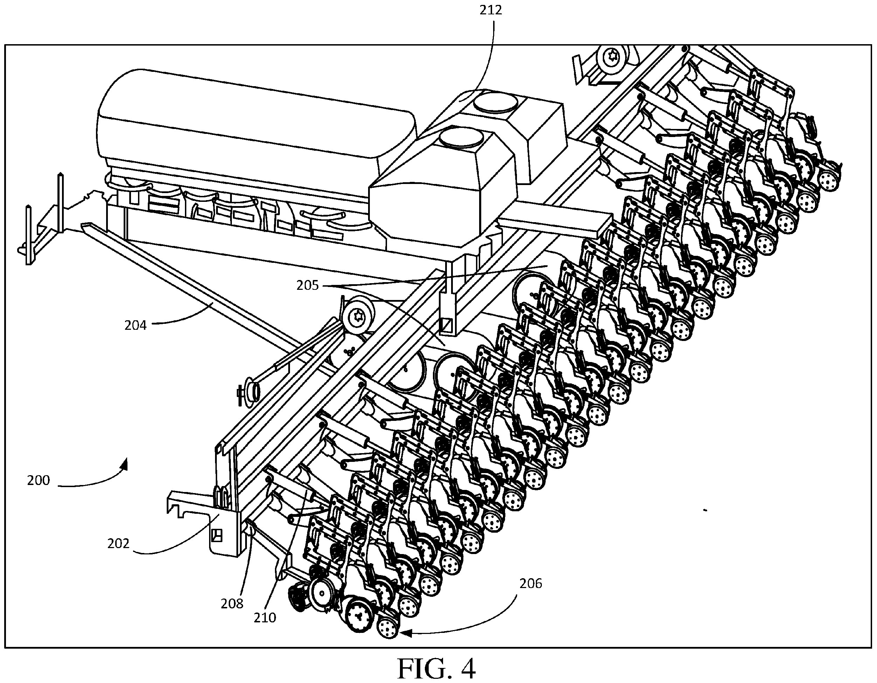

FIG. 4 is a perspective view of a planter with which embodiments described herein are particularly useful. Row crop planting machine 200 bears some similarities to row crop planting machine 100 (shown in FIG. 1) and like components are numbered similarly. While row crop planting machine 100 has 16 row units, row crop planting machine 200 has 24 row units 206. A rockshaft 208 is mounted to frame 202. The position of rockshaft 208 is controlled by one or more rockshaft cylinders 210. Each of row units 206 is pivotally coupled to rockshaft 208 and an actuator such as hydraulic cylinder 228 controls the vertical force and/or position of each of the row units 206. Row crop planting machine 200 includes seed tank 212 that provides seeds to each row unit 206, which then plants each seed. A set of frame support elements (e.g. wheels or tracks) 205 is operably coupled to and supports frame 202.

As set forth above, the depth of engagement of an agricultural implement, and a planter in particular, is a very important quantity to control accurately during the agricultural operation. When traversing terrain with a planter, large changes in elevation, such as crossing terraces can cause the row units to lift out of the ground or be pushed up to their stops, exceeding the current limits of row unit travel. In accordance with some embodiments described below, closed loop control of the rockshaft is provided to ensure that while planting across various terrain that the row units always have desirable contact with the ground. Predictive implement height control is provided for this closed loop control. As used herein, "predictive" height control means that the distance from the implement to the ground is predicted before the ground engaging portion arrives at a particular location, and then a control signal is generated to control the rockshaft (i.e., by controlling rockshaft cylinders 210 and/or individual row hydraulic downforce actuators 228) to maintain the ground engaging portion at the correct depth of engagement. As set forth below, there are a number of ways in which the distance can be measured or otherwise determined.

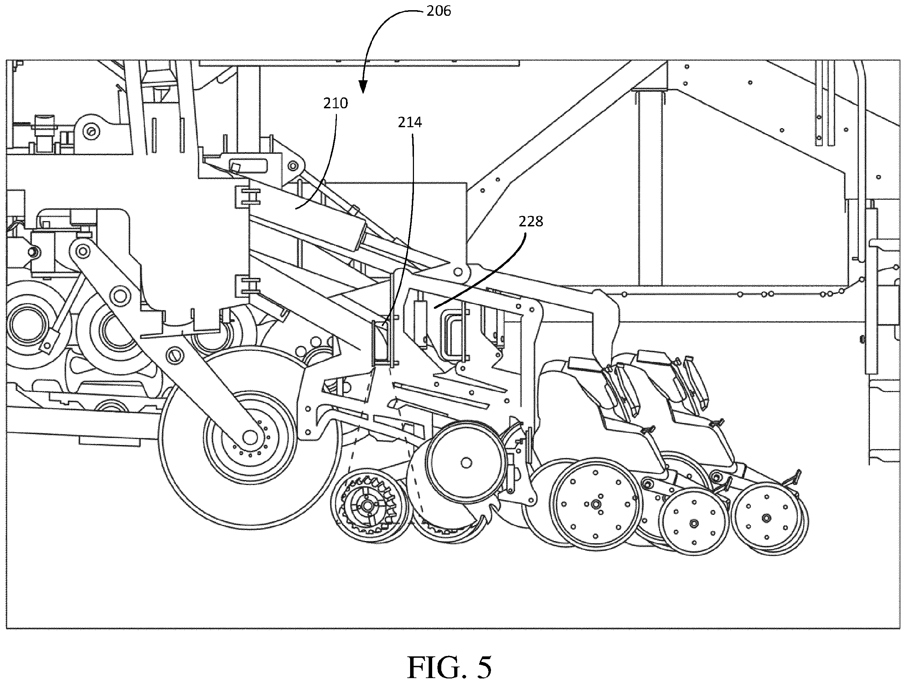

FIG. 5 is a side view of a portion of a row unit having a predictive ground sensor and row unit height adjustment mechanism in accordance with one embodiment. In the example illustrated in FIG. 5, row unit 206 includes a ground distance sensor 214 mounted to row unit 206 and arranged to sense a distance from row unit 206 to the ground. Sensor 214 can employ any suitable technology to generate a signal indicative of the distance. For example, sensor 214 can be an ultrasonic sensor, a lidar sensor, or a radar sensor. Sensor 214 is operably coupled to a processor or controller that uses the sensed distance to generate a control signal to hydraulic cylinder 210 to control the height of row unit 206. While the embodiment shown in FIG. 5 provides a sensor mounted to row unit 206, the sensor 214 can be mounted in any suitable location that can provide an indication of distance to ground. For example, the sensor may be mounted on a draft tube in front of the main-frame. Further, the sensor may be mounted to the towing vehicle to detect relative motion between the towing vehicle and the planter. Examples of such sensors include towing vehicle pitch, yaw, and roll sensors as well as a gyroscopic sensor mounted on the towing vehicle.

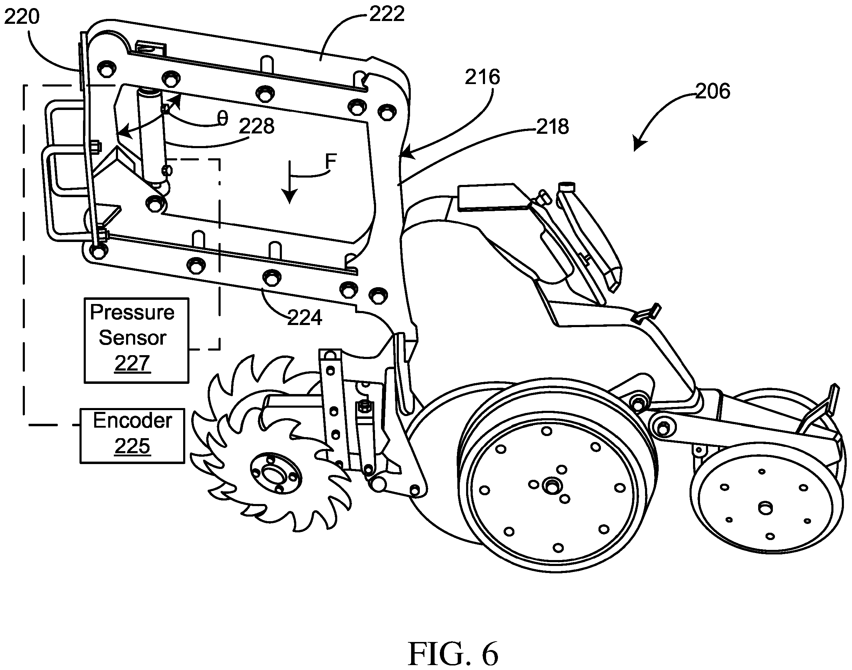

FIG. 6 is a side view of a portion of a row unit having a predictive ground sensor and row unit height adjustment mechanism in accordance with another embodiment. FIG. 6 illustrates a portion of row unit 206. More specifically, row unit 206 includes a linkage mechanism 216 that includes a first pair of parallel arms 218, 220 and a second pair of parallel arms 222, 224.

As the height of the row unit changes, the relative angle θ between the first pair of arms and the second pair of arms changes as well. This angle θ can be measured directly with a position sensor 225, such as encoder, that is coupled to one of the first pair of arms and one of the second pair of arms. Position sensor 225 may be any suitable type of device that provides an indication of position, such as an encoder (including a rotary potentiometer, a linear potentiometer, a rotary magnetic encoder, a linear magnetic encoder, a rotary optical encoder, or a linear optical encoder). The encoder provides a measurement of θ, which is then used by a processor or controller to adjust rockshaft height to maintain optimum row unit angle.

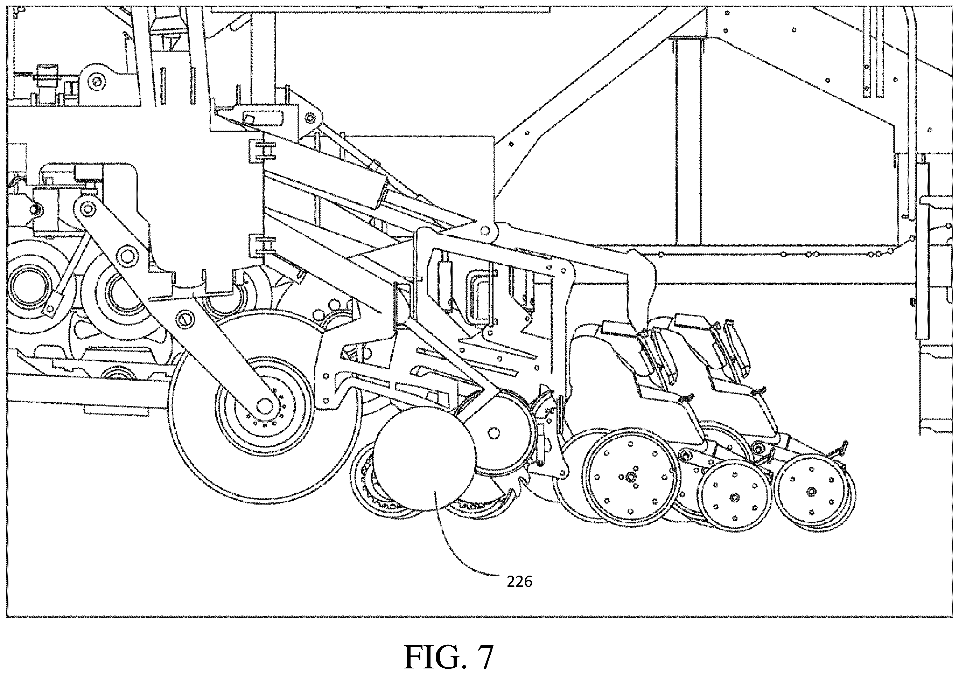

FIG. 7 is a side view of a portion of a row unit having a predictive ground sensor and row unit height adjustment mechanism in accordance with another embodiment. In the illustrated example, gauge wheel 226. Gauge wheel 226 is operably mounted to rockshaft 208 (shown in FIG. 4) and is urged into contact with the terrain using a suitable bias member, such as a spring or hydraulic cylinder. The relationship between the ground and the rockshaft 208 is determined by measuring the position of gauge wheel 226. The position can be determined in any suitable manner, such as using an encoder or position sensor described above. The signal from the encoder or position sensor is then provided to the processor or controller to adjust the position of rockshaft 208. While the embodiment shown in FIG. 7 provides gauge wheel 226 mounted to rockshaft, embodiments can be practiced where the gauge wheel is located in other positions as long as the gauge wheel is able to detect distance to ground. For example, in some embodiments, gauge wheel 226 is mounted to the front of the bar. In still another embodiment, a pair of gauge wheels are used, one leading and one trailing, and a signal is from an encoder is provided indicative of the wheels being out of plane.

Referring back to FIG. 6, if position control is not possible, then it may still be possible to provide closed loop rockshaft position control. In one example, an applied downforce F can be measured by determining the pressure within pressure cylinder 228 using pressure sensor 227. Further, the gauge wheel reaction force may be determined by the weight of the row and the applied downforce via individual row hydraulic downforce (IRHD) pressure cylinder 228. Draft is dependent on soil conditions, planting depth, and speed. An estimate of draft can be obtained using gauge wheel reactions, then a sum of the moments about rockshaft 208 can be calculated considering the number of row units on rockshaft 208 to determine the pressure in the rockshaft cylinder 210 to appropriately let the system float.

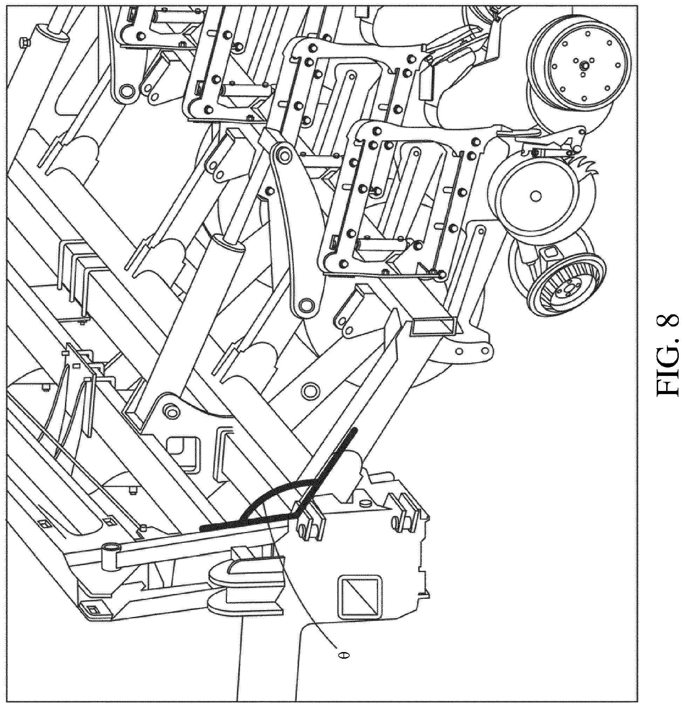

FIG. 8 is a perspective view of a portion of a row unit having a predictive ground sensor and row unit height adjustment mechanism in accordance with one embodiment. FIG. 8 illustrates an angle θ that represents the position of the rockshaft 208 relative to the rest of the frame. In accordance with various examples described above, closed loop control of this position is provided regardless of whether the position of the rockshaft relative to ground is measured directly (i.e., using a sensor that measures a distance from the rockshaft to the terrain) or indirectly (i.e., measuring a downforce-related pressure, such as pressure within an IRHD cylinder).

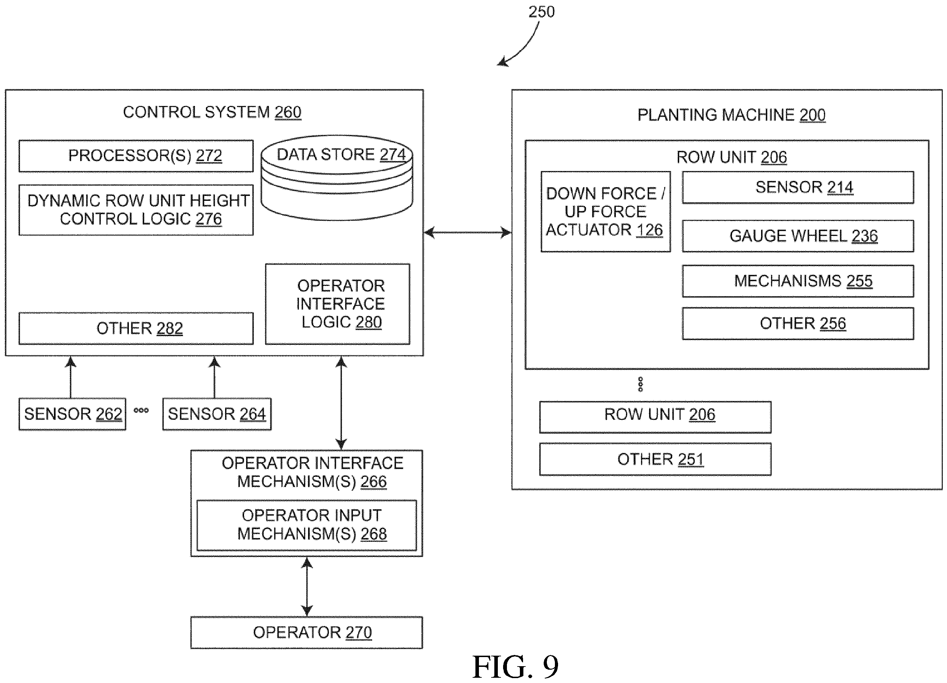

While embodiments described herein generally sense distance to ground prior to a ground-engaging element encountering the sensed location, it is expressly contemplated that accuracy of the system and efficiency of operation may be improved by using a topographical map in conjunction with a GPS sensor. This map information and GPS location can be provided as an additional sensor input to processor 272 (shown in FIG. 9).

FIG 9 is a system block diagram of an agricultural machine architecture 250 for automatically controlling planting depth. Architecture 250, includes a planting machine, such as planter 200 (shown in FIG. 4) which has a plurality of row units (such as row units 206 also shown in FIG. 4) and it can have other items 251. Each row unit 206 may have one or more sensors 214 or a gauge wheel 226 or other suitable ground measurement mechanism 256. Row unit 206 is also shown with other mechanisms 255. Mechanisms 255 illustratively include gauge wheels 116, disc opener 114, closing wheels 118, and some or all of the other mechanisms shown in previous figures on row unit 106 or 206 or different mechanisms.

Row unit 206 can have a wide variety of other things 256 as well.

Also, as shown in FIG. 9, each row unit 206 may have the downforce actuator 228 and a planting depth actuator assembly 154. In some examples, downforce actuator 228 illustratively exerts additional downforce on row unit 206 to keep gauge wheels in contact with the ground, as discussed above. Also, in one example, downforce actuator 228 may also be an upforce actuator.

FIG. 9 also shows that, in one example, control system 260 can illustratively receive inputs from additional sensors 262-264, and it can also interact with operator interface mechanisms 266. Operator interface mechanisms 266 can include operator input mechanisms 268 that operator 270 can interact with in order to control and manipulate control system 260, and some parts of planting machine 200.

Therefore, in the example illustrated, control system 260 can include one or more processors 272, a data store 274, row unit height control logic 276, operator interface logic 280, and it can include a wide variety of other items 282.

Operator interface mechanisms 266 can include a wide variety of mechanisms, such as a display screen or other visual output mechanisms, audio mechanisms, haptic mechanisms, levers, linkages, buttons, user actuatable display elements (such as icons, displayed links, buttons, etc.), foot pedals, joysticks, steering wheels, among a wide variety of others. Operator interface logic 280 illustratively controls outputs on the operator interface mechanisms 266 and can detect operator inputs through the operator input mechanisms 268. It can communicate an indication of those inputs to other items in control system 260 or elsewhere.

Sensors 262-264 can also be a wide variety of different types of sensors that can be used by row unit height control logic 276, or other items.

FIG. 9 shows that, in one example, architecture 250 includes a planting machine (such as planting machine 200 shown in the previous figures) and a control system 260. Control system 260 can be carried by the towing machine that is towing planting machine 200, it can be carried by planting machine 200, or it can be distributed among the towing machine, planting machine 200 and a wide variety of other locations. In one example, control system 260 generates control signals to control the planting machine 200, and as will be described in greater detail more specifically below, the planting depth that the row units on planting machine 200 are using to plant seeds. FIG. 9 also shows that, in one example, control system 260 can receive sensor signals from a plurality of different sensors 262 and 264. It also shows that operator 270 (which may be the operator of the towing vehicle) can interact with control system 260 through operator interface mechanisms 266 which can include, for instance, operator input mechanisms 268.

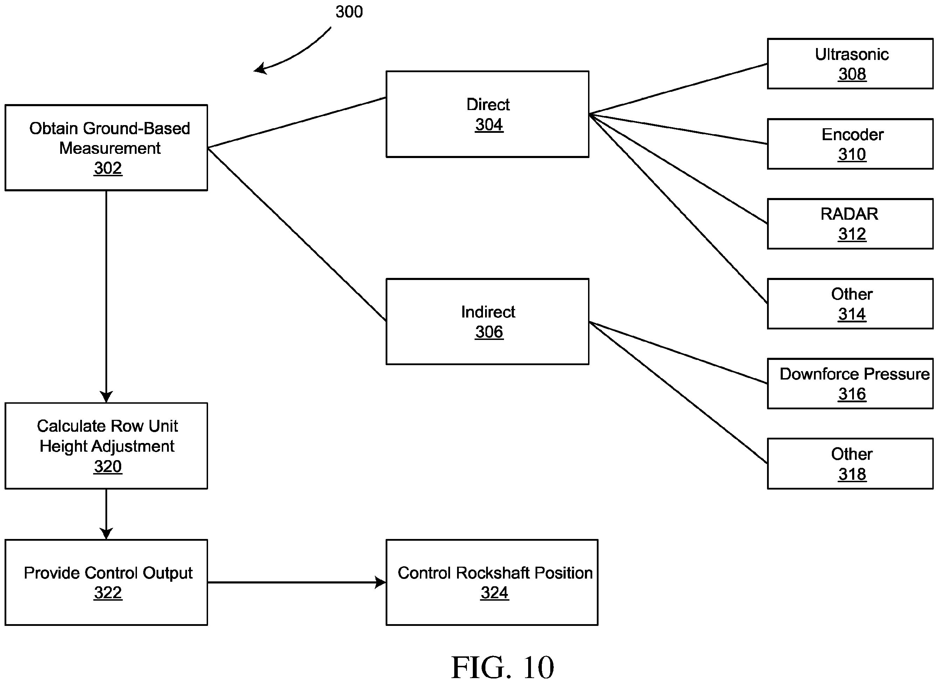

FIG. 10 is a flow diagram of a method of providing predictive implement height control for an agricultural implement in accordance with one embodiment. Method 300 begins at block 302 where one or more ground-based measurements are obtained. These ground-based measurements may be obtained for each row unit, or ground engaging element, of the agricultural machine, or for groups of row units/ground engaging elements. The ground-based measurements may be direct ground-based measurements, such as those obtained from one or more sensors that directly sense a distance to the ground relative to each row unit, as indicated at reference numeral 304. Examples of direct measurements includes measurements obtained from ultrasonic sensors 308, measurements obtained from encoders 310, measurements obtained from radar sensors 312, as well as measurements obtained from other types of sensors, 314. Additionally, or alternatively, ground-based measurements can be obtained indirectly, as indicated at reference numeral 306. Examples, of indirect ground-based measurements include measuring the pressure of fluid within a downforce actuator 316 or measuring another quantity that is related to the degree of ground engagements, as indicated at reference numeral 318. An example, of such a measurement includes the measurement of coulter force.

Next, at block 320, the one or more ground-based measurements are used to calculate row unit height adjustments. At block 322, these height adjustments are used to generate control outputs to individual row unit downforce actuators 324 to ensure that the row units maintain correct height even as the agricultural implements encounters changing terrain.

It will be noted that the above discussion has described a variety of different systems, components and/or logic. It will be appreciated that such systems, components and/or logic can be comprised of hardware items (such as processors and associated memory, or other processing components, some of which are described below) that perform the functions associated with those systems, components and/or logic. In addition, the systems, components and/or logic can be comprised of software that is loaded into a memory and is subsequently executed by a processor or server, or other computing component, as described below. The systems, components and/or logic can also be comprised of different combinations of hardware, software, firmware, etc., some examples of which are described below. These are only some examples of different structures that can be used to form the systems, components and/or logic described above. Other structures can be used as well. The present discussion has mentioned processors and servers. In one example, the processors and servers include computer processors with associated memory and timing circuitry, not separately shown. They are functional parts of the systems or devices to which they belong and are activated by and facilitate the functionality of the other components or items in those systems.

Also, a number of user interface displays have been discussed. They can take a wide variety of different forms and can have a wide variety of different user actuatable input mechanisms disposed thereon. For instance, the user actuatable input mechanisms can be text boxes, check boxes, icons, links, drop-down menus, search boxes, etc. They can also be actuated in a wide variety of different ways. For instance, they can be actuated using a point and click device (such as a track ball or mouse). They can be actuated using hardware buttons, switches, a joystick or keyboard, thumb switches or thumb pads, etc. They can also be actuated using a virtual keyboard or other virtual actuators. In addition, where the screen on which they are displayed is a touch sensitive screen, they can be actuated using touch gestures. Also, where the device that displays them has speech recognition components, they can be actuated using speech commands.

A number of data stores have also been discussed. It will be noted they can each be broken into multiple data stores. All can be local to the systems accessing them, all can be remote, or some can be local while others are remote. All of these configurations are contemplated herein.

Also, the figures show a number of blocks with functionality ascribed to each block. It will be noted that fewer blocks can be used so the functionality is performed by fewer components. Also, more blocks can be used with the functionality distributed among more components.

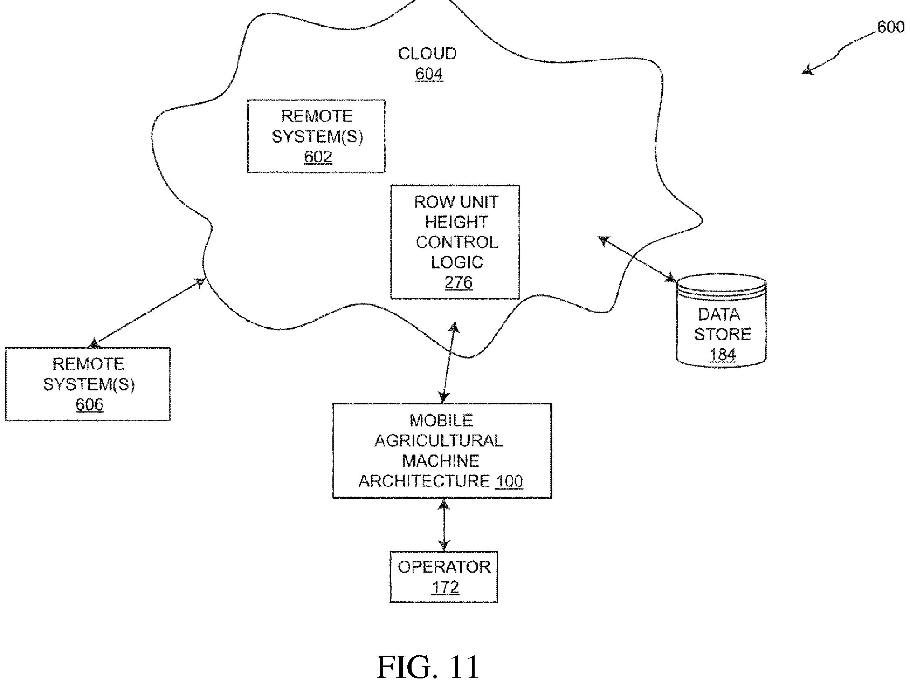

FIG. 11 is a block diagram of mobile agricultural machine architecture 100 deployed in a remote server architecture. In an example, remote server architecture 600 can provide computation, software, data access, and storage services that do not require end-user knowledge of the physical location or configuration of the system that delivers the services. In various examples, remote servers can deliver the services over a wide area network, such as the internet, using appropriate protocols. For instance, remote servers can deliver applications over a wide area network, and they can be accessed through a web browser or any other computing component. Software or components shown in FIG. 9 as well as the corresponding data, can be stored on servers at a remote location. The computing resources in a remote server environment can be consolidated at a remote data center location or they can be dispersed. Remote server infrastructures can deliver services through shared data centers, even though they appear as a single point of access for the user. Thus, the components and functions described herein can be provided from a remote server at a remote location using a remote server architecture. Alternatively, they can be provided from a conventional server, or they can be installed on client devices directly, or in other ways.

FIG. 9 shows that row unit height control logic 276, or remote systems 602, among other things can be located at a remote server location in cloud 604. Therefore, mobile agricultural machine architecture 100 accesses those systems through cloud 604. FIG. 9 also shows that machine 100 can communicate with other remote systems 606 (such as a manager system, a supplier or vendor system, etc.) through cloud 604.

FIG. 9 also depicts another example of a remote server architecture. By way of example, data store 184 can be disposed at a location separate from cloud 604 and accessed through the cloud 604. Regardless of where they are located, they can be accessed directly by work machine 100, through a network (either a wide area network or a local area network), they can be hosted at a remote site by a service, or they can be provided as a service, or accessed by a connection service that resides in a remote location. Also, the data can be stored in substantially any location and intermittently accessed by, or forwarded to, interested parties.

For instance, physical carriers can be used instead of, or in addition to, electromagnetic wave carriers. In such an example, where cell coverage is poor or nonexistent, another work machine (such as a fuel truck) can have an automated information collection system. As the work machine comes close to the fuel truck for fueling, the system automatically collects the information from the work machine using any type of ad-hoc wireless connection. The collected information can then be forwarded to the main network as the fuel truck reaches a location where there is cellular coverage (or other wireless coverage).

It will also be noted that the elements of FIG. 9 or portions of them, can be disposed on a wide variety of different devices. Some of those devices include servers, desktop computers, laptop computers, tablet computers, or other mobile devices, such as palm top computers, cell phones, smart phones, multimedia players, personal digital assistants, etc.

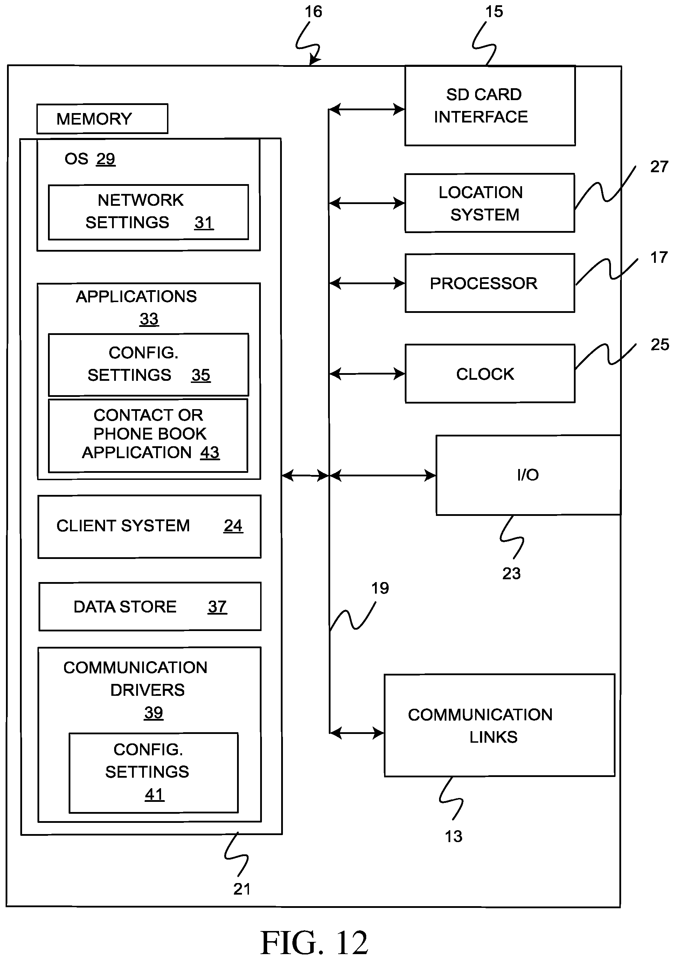

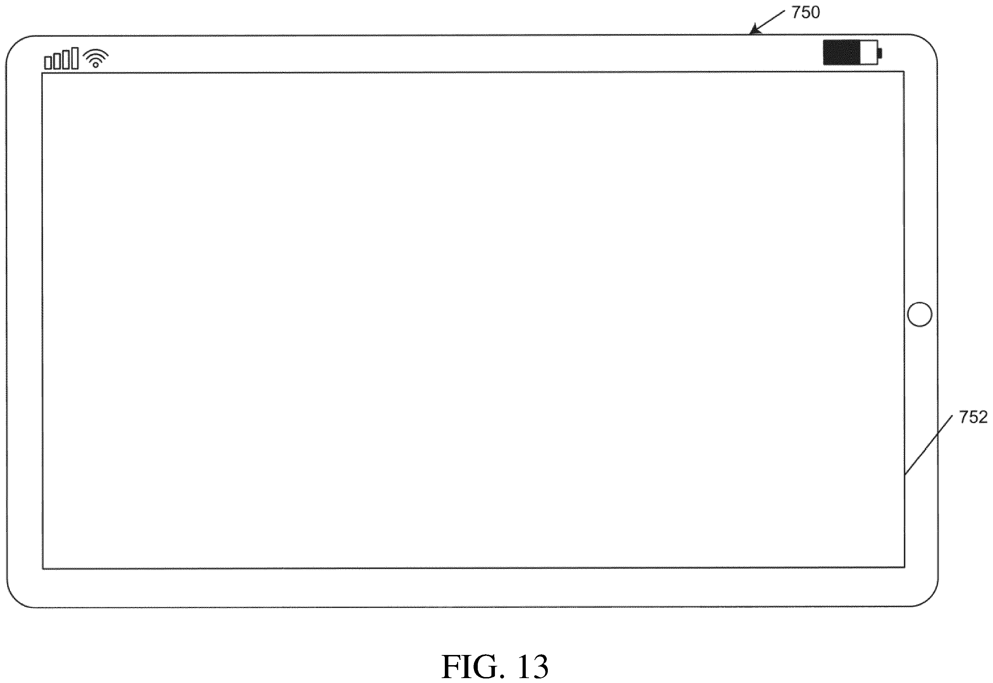

FIG. 12 is a simplified block diagram of one illustrative example of a handheld or mobile computing device that can be used as a user's or client's hand held device 16, in which the present system (or parts of it) can be deployed. For instance, a mobile device can be deployed in the operator compartment of towing vehicle for use in generating, processing, or displaying height and depth determinations, recommendations, etc. FIGS. 13-14 are examples of handheld or mobile devices.

FIG. 12 provides a general block diagram of the components of a client device 16 that can run some components shown in FIG. 9, that interacts with them, or both. In the device 16, a communications link 13 is provided that allows the handheld device to communicate with other computing devices and under some examples provides a channel for receiving information automatically, such as by scanning. Examples of communications link 13 include allowing communication though one or more communication protocols, such as wireless services used to provide cellular access to a network, as well as protocols that provide local wireless connections to networks.

Under other examples, applications can be received on a removable Secure Digital (SD) card that is connected to an interface 15. Interface 15 and communication links 13 communicate with a processor 17 (which can also embody processor(s) from previous Figures) along a bus 19 that is also connected to memory 21 and input/output (I/O) components 23, as well as clock 25 and location system 27.

I/O components 23, in one example, are provided to facilitate input and output operations. I/O components 23 for various examples of the device 16 can include input components such as buttons, touch sensors, optical sensors, microphones, touch screens, proximity sensors, accelerometers, orientation sensors and output components such as a display device, a speaker, and or a printer port. Other I/O components 23 can be used as well.

Clock 25 illustratively comprises a real time clock component that outputs a time and date. It can also, illustratively, provide timing functions for processor 17.

Location system 27 illustratively includes a component that outputs a current geographical location of device 16. This can include, for instance, a global positioning system (GPS) receiver, a LORAN system, a dead reckoning system, a cellular triangulation system, or other positioning system. It can also include, for example, mapping software or navigation software that generates desired maps, navigation routes and other geographic functions.

Memory 21 stores operating system 29, network settings 31, applications 33, application configuration settings 35, data store 37, communication drivers 39, and communication configuration settings 41. Memory 21 can include all types of tangible volatile and nonvolatile computer-readable memory devices. It can also include computer storage media (described below). Memory 21 stores computer readable instructions that, when executed by processor 17, cause the processor to perform computer-implemented steps or functions according to the instructions. Processor 17 can be activated by other components to facilitate their functionality as well.

FIG. 13 shows one example of handheld or mobile computing device that can be used in the machines and architectures shown in the previous FIGS. In FIG. 13, device 750 is a tablet computer. Tablet 750 is shown with user interface display screen 752. Screen 752 can be a touch screen or a pen-enabled interface that receives inputs from a pen or stylus. It can also use an on-screen virtual keyboard. Of course, it might also be attached to a keyboard or other user input device through a suitable attachment mechanism, such as a wireless link or USB port, for instance. Tablet 750 can also illustratively receive voice inputs as well.

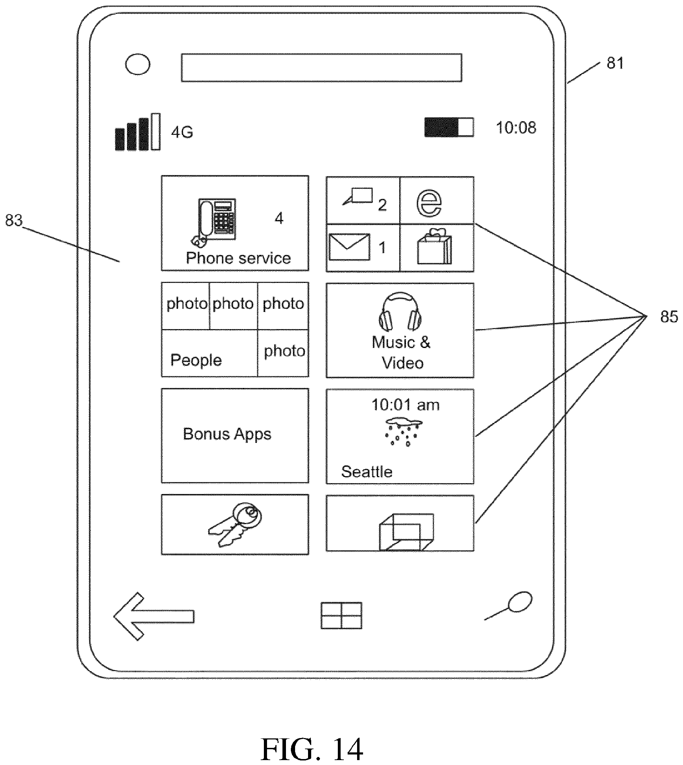

FIG. 14 shows one example of a handheld or mobile computing device that can be used in the machines and architectures shown in the previous FIGS. The device in FIG. 14 is a smart phone 81. Smart phone 81 has a touch sensitive display 83 that displays icons or tiles or other user input mechanisms 85. Mechanisms 85 can be used by a user to run applications, make calls, perform data transfer operations, etc. In general, smart phone 81 is built on a mobile operating system and offers more advanced computing capability and connectivity than a feature phone. Note that other forms of the devices 16 are possible.

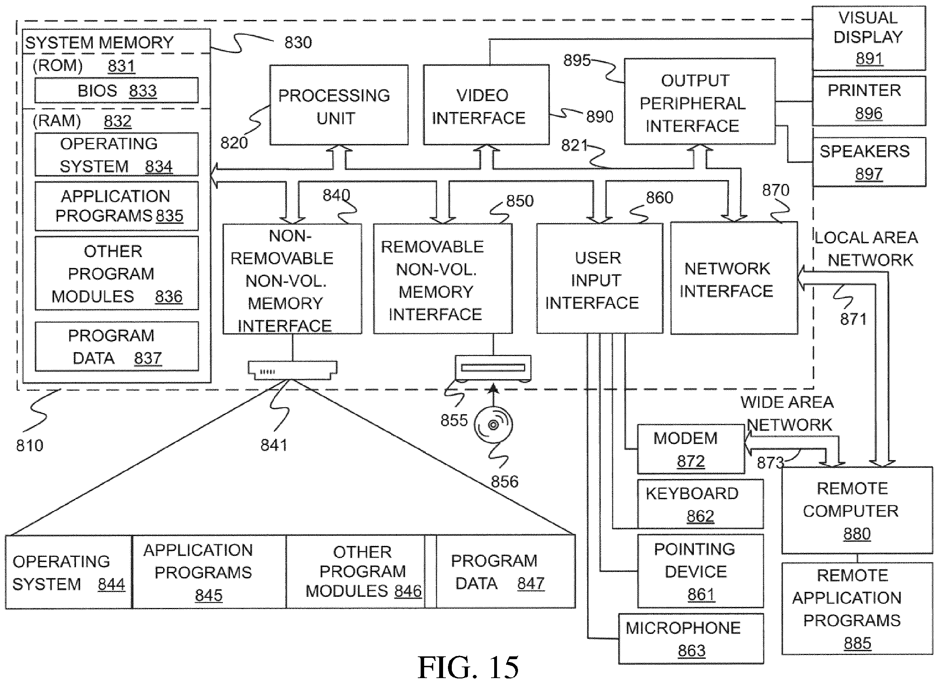

FIG. 15 shows one example of a computing environment that can be used in the machines and architectures of the previous FIGS. With reference to FIG. 15, an example system for implementing some examples includes a general-purpose computing device in the form of a computer 810. Components of computer 810 can include, but are not limited to, a processing unit 820 (which can comprise processor(s) from previous FIGS.), a system memory 830, and a system bus 821 that couples various system components including the system memory to the processing unit 820. The system bus 821 can be any of several types of bus structures including a memory bus or memory controller, a peripheral bus, and a local bus using any of a variety of bus architectures. Memory and programs described with respect to previous FIGS. can be deployed in corresponding portions of FIG. 15.

Computer 810 typically includes a variety of computer readable media. Computer readable media can be any available media that can be accessed by computer 810 and includes both volatile and nonvolatile media, removable and non-removable media. By way of example, and not limitation, computer readable media can comprise computer storage media and communication media. Computer storage media is different from, and does not include, a modulated data signal or carrier wave. It includes hardware storage media including both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 810. Communication media can embody computer readable instructions, data structures, program modules or other data in a transport mechanism and includes any information delivery media. The term "modulated data signal" means a signal that has one or more of its characteristics set or changed in such a manner as to encode information in the signal.

The system memory 830 includes computer storage media in the form of volatile and/or nonvolatile memory such as read only memory (ROM) 831 and random access memory (RAM) 832. A basic input/output system 833 (BIOS), containing the basic routines that help to transfer information between elements within computer 810, such as during start-up, is typically stored in ROM 831. RAM 832 typically contains data and/or program modules that are immediately accessible to and/or presently being operated on by processing unit 820. By way of example, and not limitation, FIG. 15 illustrates operating system 834, application programs 835, other program modules 836, and program data 837.

The computer 810 can also include other removable/non-removable volatile/nonvolatile computer storage media. By way of example only, FIG. 15 illustrates a hard disk drive 841 that reads from or writes to non-removable, nonvolatile magnetic media, an optical disk drive 855, and nonvolatile optical disk 856. The hard disk drive 841 is typically connected to the system bus 821 through a non-removable memory interface such as interface 840, and optical disk drive 855 are typically connected to the system bus 821 by a removable memory interface, such as interface 850.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (e.g., ASICs), Application-specific Standard Products (e.g., ASSPs), System-on-a-chip systems (SOCs), Complex Programmable Logic Devices (CPLDs), etc.

The drives and their associated computer storage media discussed above and illustrated in FIG. 15, provide storage of computer readable instructions, data structures, program modules and other data for the computer 810. In FIG. 15, for example, hard disk drive 841 is illustrated as storing operating system 844, application programs 845, other program modules 846, and program data 847. Note that these components can either be the same as or different from operating system 834, application programs 835, other program modules 836, and program data 837.

A user can enter commands and information into the computer 810 through input devices such as a keyboard 862, a microphone 863, and a pointing device 861, such as a mouse, trackball or touch pad. Other input devices (not shown) can include a joystick, game pad, satellite dish, scanner, or the like. These and other input devices are often connected to the processing unit 820 through a user input interface 860 that is coupled to the system bus, but can be connected by other interface and bus structures. A visual display 891 or other type of display device is also connected to the system bus 821 via an interface, such as a video interface 890. In addition to the monitor, computers can also include other peripheral output devices such as speakers 897 and printer 896, which can be connected through an output peripheral interface 895.

The computer 810 is operated in a networked environment using logical connections (such as a local area network - LAN, or wide area network-WAN, or a controller area network-CAN) to one or more sensors or remote computers, such as a remote computer 880, or other components.

When used in a LAN networking environment, the computer 810 is connected to the LAN 871 through a network interface or adapter 870. When used in a WAN networking environment, the computer 810 typically includes a modem 872 or other means for establishing communications over the WAN 873, such as the Internet. In a networked environment, program modules can be stored in a remote memory storage device. FIG. 15 illustrates, for example, that remote application programs 885 can reside on remote computer 880.

It should also be noted that the different examples described herein can be combined in different ways. That is, parts of one or more examples can be combined with parts of one or more other examples. All of this is contemplated herein.
Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. An agricultural machine (100), comprising:
a frame (202);
a set of frame support elements (205) supporting the frame (104);
a set of row units (206) mounted to the frame (202) and movable relative to the wheels to change a depth of engagement of the row units (206) with the ground over which the agricultural machine (100) travels;
at least one actuator (210) that drives movement of the set of row units (206) relative to the frame (202);
a ground sensor (214) operably coupled to the agricultural machine (100) and configured to provide a ground distance signal; and
row unit height control logic (276) that is configured to receive the ground distance signal and provide a control output to the at least one actuator (210) to generate a height value of the row units (206) relative to ground,
**characterized in**
further comprising a rockshaft (208) pivotally coupled to the frame (202) and the plurality of row units (206) operably coupled to the rockshaft (208), wherein the ground sensor (214) is operably mounted to the rockshaft (208).

2. The agricultural machine of claim 1, wherein the agricultural machine is a planter and the row units include a plurality of opener discs (114).

3. The agricultural machine of one of the claims 1 or 2, wherein the ground sensor (214) is selected from the group consisting of an ultrasonic sensor (308), a lidar sensor, and a radar sensor (312).

4. The agricultural machine of one of the claims 1 to 3, wherein the ground sensor includes a position sensor (225) configured to measure an angle (θ) of a mechanism that varies with distance to ground.

5. The agricultural machine of one of the claims 1 to 4, wherein the ground sensor includes a gauge wheel (226) operably mounted to a row unit, the gauge wheel (226) having angle that varies with distance to ground, and wherein the ground distance signal is received from an position sensor coupled to the gauge wheel.

6. The agricultural machine of one of the claims 1 to 5, wherein the ground sensor includes a plurality of gauge wheels (226), one leading and one trailing, and wherein the ground distance signal is based on the plurality of gauge wheels being out of plane.

7. The agricultural machine of one of the claims 1 to 6, wherein the ground sensor is an indirect sensor (306).

8. The agricultural machine of one of the claims 1 to 7, wherein the ground sensor includes a pressure sensor (316) operably coupled to an individual row hydraulic downforce cylinder.

9. The agricultural machine of one of the claims 1 to 9, wherein the ground sensor includes a sensor mounted to a draft tube in front of a main frame.

10. The agricultural machine of one of the claims 1 to 10, wherein the ground sensor is configured to detect relative motion between a towing machine and the agricultural machine.

11. The agricultural machine of claim 10, wherein the relative motion includes at least one of pitch, yaw, and roll.

12. The agricultural machine of claim 10 or 11, wherein the ground sensor is a gyroscope mounted to the towing machine.

13. A method of providing predictive implement height control for an agricultural machine (100) according to one of the claims 1 to 12, wherein the agricultural machine (100) having a set of ground row units (206) movable mounted to the rockshaft (208) and movable to change a depth of engagement of the row units (206) with the ground over which the agricultural machine travels, the method comprising:
obtaining (302) at least one ground-based measurement;
calculating (320) a row unit height adjustment; and
providing a control output (332) based on the row unit height adjustment.

## Patentansprüche

1. Landwirtschaftliche Maschine (100), die Folgendes umfasst:
einen Rahmen (202);
einen Satz von Stützelementen (205), die den Rahmen (104) stützen;
einen Satz von Reiheneinheiten (206), die am Rahmen (202) montiert und relativ zu den Rädern bewegbar sind, um eine Eingriffstiefe der Reiheneinheiten (206) in den Boden zu ändern, über den die Landwirtschaftsmaschine (100) fährt;
mindestens einen Aktuator (210), der eine Bewegung des Satzes von Reiheneinheiten (206) relativ zum Rahmen (202) antreibt;
einen Bodensensor (214), der an die Landwirtschaftsmaschine (100) wirkgekoppelt und dazu ausgelegt ist, ein Bodenabstandssignal bereitzustellen; und
eine Reihen- und Höhensteuerlogik (276), die dazu ausgelegt ist, das Bodenabstandssignal zu empfangen und dem mindestens einen Aktuator (210) eine Steuerausgabe bereitzustellen, um einen Höhenwert der Reiheneinheiten (206) relativ zum Boden zu erzeugen,
**dadurch gekennzeichnet, dass**
sie ferner eine Schiebewelle (208) umfasst, die an den Rahmen (202) und die Vielzahl von Reiheneinheiten (206), die an die Schiebewelle (208) wirkgekoppelt sind, schwenkbar gekoppelt ist, wobei der Bodensensor (214) wirkmäßig an der Schiebewelle (208) montiert ist.

2. Landwirtschaftsmaschine nach Anspruch 1, wobei die Landwirtschaftsmaschine eine Pflanzmaschine ist und die Reiheneinheiten eine Vielzahl von Öffnungsscheiben (114) beinhalten.

3. Landwirtschaftsmaschine nach einem der Ansprüche 1 oder 2, wobei der Bodensensor (214) ausgewählt ist aus der Gruppe, die aus einem Ultraschallsensor (308) einem Lidarsensor und einem Radarsensor (312) besteht.

4. Landwirtschaftsmaschine nach einem der Ansprüche 1 bis 3, wobei der Bodensensor einen Positionssensor (225) beinhaltet, der dazu ausgelegt ist, einen Winkel (θ) eines Mechanismus zu messen, der mit einem Abstand vom Boden variiert.

5. Landwirtschaftsmaschine nach einem der Ansprüche 1 bis 4, wobei der Bodensensor ein Einstellrad (226) beinhaltet, das wirkmäßig an einer Reiheneinheit montiert ist, wobei das Einstellrad (226) einen Winkel aufweist, der mit einem Abstand vom Boden variiert, und wobei das Bodenabstandssignal von einem Positionssensor empfangen wird, der an das Einstellrad gekoppelt ist.

6. Landwirtschaftsmaschine nach einem der Ansprüche 1 bis 5, wobei der Bodensensor eine Vielzahl von Einstellenrädern (226), ein vorderes und ein hinteres, beinhaltet und wobei das Bodenabstandssignal darauf basiert, dass die Vielzahl von Einstellrädern außerhalb der Ebene liegen.

7. Landwirtschaftsmaschine nach einem der Ansprüche 1 bis 6, wobei der Bodensensor ein indirekter Sensor (306) ist.

8. Landwirtschaftsmaschine nach einem der Ansprüche 1 bis 7, wobei der Bodensensor einen Drucksensor (316) beinhaltet, der wirkmäßig an einen hydraulischen Einzelreihenanpressdruckzylinder gekoppelt ist.

9. Landwirtschaftsmaschine nach einem der Ansprüche 1 bis 9, wobei der Bodensensor einen Sensor beinhaltet, der an einem Saugrohr vor einem Hauptrahmen montiert ist.

10. Landwirtschaftsmaschine nach einem der Ansprüche 1 bis 10, wobei der Bodensensor dazu ausgelegt ist, eine relative Bewegung zwischen einer Zugmaschine und der Landwirtschaftsmaschine zu detektieren.

11. Landwirtschaftsmaschine nach Anspruch 10, wobei die relative Bewegung mindestens eines von einem Nicken, Gieren und Rollen beinhaltet.

12. Landwirtschaftsmaschine nach Anspruch 10 oder 11, wobei der Bodensensor ein Gyroskop ist, das an der Zugmaschine montiert ist.

13. Verfahren zum Bereitstellen einer prädiktiven Anbaugerätehöhensteuerung für eine Landwirtschaftsmaschine (100) nach einem der Ansprüche 1 bis 12, wobei die Landwirtschaftsmaschine (100) einen Satz von Bodenreiheneinheiten (206) aufweist, die bewegbar an der Schiebewelle (208) montiert sind und bewegbar sind, um eine Eingriffstiefe der Reiheneinheiten (206) in den Boden zu ändern, über den die Landwirtschaftsmaschine fährt, wobei das Verfahren Folgendes umfasst:
Erhalten (302) von mindestens einer bodenbasierten Messung;
Berechnen (320) einer Reiheneinheitenhöhenanpassung und Bereitstellen einer Steuerausgabe (332) auf Basis der Reiheneinheitenhöhenanpassung.

## Revendications

1. Machine agricole (100), comprenant :
un châssis (202) ;
un ensemble d'éléments de support de châssis (205) supportant le châssis (104) ;
un ensemble d'unités de rang (206) montées sur le châssis (202) et mobiles par rapport aux roues pour changer une profondeur de mise en prise des unités de rang (206) avec le sol sur lequel la machine agricole (100) se déplace ;
au moins un actionneur (210) qui entraîne un mouvement de l'ensemble d'unités de rang (206) par rapport au châssis (202) ;
un capteur de sol (214) couplé de manière opérationnelle à la machine agricole (100) et configuré pour fournir un signal de distance au sol ; et
une logique de commande de hauteur d'unité de rang (276) qui est configurée pour recevoir le signal de distance au sol et fournir une sortie de commande à l'au moins un actionneur (210) pour générer une valeur de hauteur des unités de rang (206) par rapport au sol,
**caractérisée en ce que**
elle comprend en outre un arbre de levage (208) couplé de manière pivotante au châssis (202) et la pluralité d'unités de rang (206) couplées de manière opérationnelle à l'arbre de levage (208), dans laquelle le capteur de sol (214) est monté de manière opérationnelle à l'arbre de levage (208).

2. Machine agricole selon la revendication 1, dans laquelle la machine agricole est un semoir et les unités de rang incluent une pluralité de disques ouvreurs (114).

3. Machine agricole selon l'une des revendications 1 ou 2, dans laquelle le capteur de sol (214) est choisi parmi le groupe constitué d'un capteur à ultrasons (308), d'un capteur lidar et d'un capteur radar (312).

4. Machine agricole selon l'une des revendications 1 à 3, dans laquelle le capteur de sol inclut un capteur de position (225) configuré pour mesurer un angle (θ) d'un mécanisme qui varie selon la distance au sol.

5. Machine agricole selon l'une des revendications 1 à 4, dans laquelle le capteur de sol inclut une roue de jauge (226) montée de manière opérationnelle à une unité de rang, la roue de jauge (226) ayant un angle qui varie selon la distance au sol, et dans laquelle le signal de distance au sol est reçu en provenance d'un capteur de position couplé à la roue de jauge.

6. Machine agricole selon l'une des revendications 1 à 5, dans laquelle le capteur de sol inclut une pluralité de routes de jauge (226), une avant et une arrière, et dans laquelle le signal de distance au sol est basé sur la pluralité de roues de jauge étant hors du plan.

7. Machine agricole selon l'une des revendications 1 à 6, dans laquelle le capteur de sol est un capteur indirect (306).

8. Machine agricole selon l'une des revendications 1 à 7, dans laquelle le capteur de sol inclut un capteur de pression (316) couplé de manière opérationnelle à un vérin d'appui hydraulique de rang individuel.

9. Machine agricole selon l'une des revendications 1 à 9, dans laquelle le capteur de sol inclut un capteur monté sur un tube de traction à l'avant d'un châssis principal.

10. Machine agricole selon l'une des revendications 1 à 10, dans laquelle le capteur de sol est configuré pour détecter un mouvement relatif entre une machine de traction et la machine agricole.

11. Machine agricole selon la revendication 10, dans laquelle le mouvement relatif inclut au moins l'un d'un tangage, d'un lacet et d'un roulis.

12. Machine agricole selon la revendication 10 ou 11, dans laquelle le capteur de sol est un gyroscope monté sur la machine de traction.

13. Procédé de fourniture d'une commande prédictive de hauteur d'outil pour une machine agricole (100) selon l'une des revendications 1 à 12, dans laquelle la machine agricole (100) a un ensemble d'unités de rang de sol (206) mobiles montées sur l'arbre de levage (208) et mobiles pour changer une profondeur de mise en prise des unités de rang (206) avec le sol sur lequel la machine agricole se déplace, le procédé comprenant :
l'obtention (302) d'au moins une mesure basée sur le sol ;
le calcul (320) d'un réglage de hauteur d'unité de rang ; et
la fourniture d'une sortie de commande (332) basée sur le réglage de hauteur d'unité de rang.
